# EUROPÄISCHE PATENTSCHRIFT

(11) **EP 3 642 090 B1**
(45) Veröffentlichungstag und Bekanntmachung des Hinweises auf die Patenterteilung: **05.06.2024**
(21) Anmeldenummer: 18721983.7
(22) Anmeldetag: 25.04.2018
(51) Int. Cl.: B60T 8/92

(54) **BREMSSYSTEM EINES ELEKTRO- ODER EINES HYBRIDFAHRZEUGS SOWIE VERFAHREN ZU DESSEN BETREIBEN**
BRAKE SYSTEM OF AN ELECTRIC VEHICLE OR HYBRID VEHICLE AND METHOD FOR OPERATING SAME
SYSTÈME DE FREINAGE D'UN VÉHICULE ÉLECTRIQUE OU HYBRIDE ET PROCÉDÉ POUR SON FONCTIONNEMENT

(30) Priorität: 22.06.2017 DE 102017005881
(43) Veröffentlichungstag der Anmeldung: 29.04.2020
(73) Patentinhaber: ZF CV Systems Europe BV, 1170 Brussels (BE)
(72) Erfinder: DIECKMANN, Thomas, 30982 Pattensen (DE); DORFF, Eike, 14089 Berlin (DE); FRANK, Jochen, 67071 Ludwigshafen (DE); SCHÜNEMANN, Gerd, 30880 Laatzen (DE)
(74) Vertreter: Rabe, Dirk-Heinrich
(86) Internationale Anmeldenummer: PCT/EP2018/060522
(87) Internationale Veröffentlichungsnummer: WO 2018/233908

(56) Entgegenhaltungen:
- EP-A2- 0 485 367
- WO-A1-2011/069724
- WO-A1-2015/090557
- JP-A- H08 182 109

## Beschreibung

Die Erfindung betrifft ein Bremssystem eines Elektrofahrzeugs oder Hybridfahrzeugs, welches mindestens zwei Antriebsräder und mindestens zwei lenkbare Räder aufweist, von denen wenigstens zwei Räder mittels zumindest einer elektromotorisch und generatorisch betreibbaren Elektromaschine antreibbar sind, und welches eine fluidische Bremsvorrichtung aufweist, welche mittels Bremsaktuatoren auf zumindest zwei Räder diese abbremsend einwirken kann. Außerdem betrifft die Erfindung ein Verfahren zum Betrieb eines derartigen Bremssystems.

Bekannte Elektrofahrzeuge und Hybridfahrzeuge verfügen in der Regel über ein pneumatisches oder ein hydraulisches Zweikreis-Bremssystem, wobei ein pneumatisches oder ein hydraulisches Bremssystem auch als fluidische Bremsvorrichtung bezeichnet werden kann. Aufgrund der mittels des Zweikreis-Bremssystems gegebenen Redundanz kann das Fahrzeug auch bei einem etwaigen Totalausfall eines der beiden pneumatischen oder hydraulischen Bremskreise stets zuverlässig bis zum vollständigen Stillstand abgebremst werden. Von Nachteil ist unter anderem, dass der zweite pneumatische oder hydraulische Bremskreis das Gewicht des Fahrzeugs und die Herstellkosten erhöht sowie Bauraum beansprucht. Außerdem steigert sich durch ein pneumatisches oder hydraulisches Zweikreis-Bremssystem die Komplexität der zur Regelung notwendigen Bordelektronik des Fahrzeugs.

Die WO2015090557A1 offenbart ein Kraftfahrzeug umfassend mehrere Räder sowie ein Bremssystem mit jeweils einem Rad zugeordneten, hydraulisch betätigbaren Bremsen, wenigstens einen Bremskreis, über den die Bremsen betätigbar sind, einen Bremskraftverstärker, über den der Bremskreis bedienbar ist, wobei der Bremskraftverstärker über ein vom Fahrer zu betätigendes Bremspedal betätigbar ist, sowie wenigstens eine über eine Steuerungseinrichtung steuerbare Druckerzeugungs- und/oder Druckspeichereinrichtung, über die der hydraulische Druck innerhalb des Bremskreises modulierbar ist, wobei das Kraftfahrzeug für einen zumindest teilautonomen Betriebsmodus mit selbsttätiger Längs- und Querführung ausgebildet ist, und dass wenigstens ein Elektromotor vorgesehen ist, über den im Fall einer im teilautonomen Betriebsmodus erfassten Fehlfunktion innerhalb des Bremssystems durch automatisches Schalten in einen generatorischen Betrieb ein Verzögerungsmoment zum Bremsen des Fahrzeugs in den Stillstand erzeugbar ist.

Die JPH08182109A offenbert ein System eines Kraftfahrzeuges, welches die kinetische Energie des Kraftfahrzeuges besser regeneriert. Dazu wird ein Schalthebel in den N-Bereich geschaltet, so dass der regenerative Bremsbetrieb aktiviert ist, sofern ein Bremspedal getreten wird. Wenn das Bremspedal nicht getreten ist, wird die Stromversorgung eines Motorsystems unterbrochen. Wenn der regenerative Bremsvorgang ausgeführt wird, ein Fahrzeug jedoch nicht bremst, wird entschieden, ob ein hydraulisches Bremssystem abnormal ist. Wenn das hydraulische Bremssystem normal ist, wird entschieden, dass das regenerative Bremssystem abnormal ist und die Stromversorgung des Motorsystems unterbrochen ist. Wenn das hydraulische Bremssystem abnormal ist, wird der Bremsbetrieb über das regenerative Bremssystem ausgeführt, und wenn das regenerative Bremssystem ebenfalls abnormal ist, wird die Stromversorgung des Motorsystems unterbrochen.

Die WO2011069724A1 offenbart ein Verfahren zum Bremsen eines Fahrzeugs mit einem elektrischen Antriebsmotor und einem mechanischen Bremssystem, wobei der elektrisch Antriebsmotor in einen Generatorbetrieb zum Bremsen des Fahrzeugs bei Vorliegen einer Fehlfunktion des mechanischen Bremssystems überführt wird.

Die DE 102014218068A1 offenbart ein Verfahren zum Betreiben eines Kraftfahrzeugs, das wenigstens eine elektrische Maschine als Antriebsmaschine und ein hydraulisches Bremssystem aufweist, wobei das Bremssystem eine von einer vorgebbaren Sollbremsleistung abhängige Istbremsleistung erzeugt. Es ist vorgesehen, dass das Bremssystem auf Funktionsfehler überwacht und dass bei Erfassen eines die Istbremsleistung des Bremssystems verringernden Funktionsfehlers die elektrische Maschine generatorisch betrieben wird.

Der Erfindung liegt demzufolge die Aufgabe zugrunde, ein konstruktiv einfacher aufgebautes und dennoch aus Sicherheitsgründen redundantes Bremssystem für ein Elektrofahrzeug oder ein Hybridfahrzeug vorzustellen. Zudem soll ein Verfahren zum sicheren Betrieb eines derartigen Bremssystems vorgestellt werden.

Diese Aufgabe wird durch ein Bremssystem mit den Merkmalen des Anspruchs 1 gelöst. Ein Verfahren zum Betrieb eines solchen Bremssystems ist im Unabhängigen Verfahrensanspruch definiert. Vorteilhafte Weiterbildungen sind in den abhängigen Ansprüchen genannt.

Demnach betrifft die Erfindung ein Bremssystem eines Elektrofahrzeugs oder Hybridfahrzeugs, welches mindestens zwei Antriebsräder und mindestens zwei lenkbare Räder aufweist, von denen wenigstens zwei Räder mittels zumindest einer elektromotorisch und generatorisch betreibbaren Elektromaschine antreibbar sind, und welches eine pneumatische Bremsvorrichtung aufweist, welche mittels Bremsaktuatoren auf zumindest zwei Räder diese abbremsend einwirken kann.

Zur Lösung der gestellten Aufgabe ist bei diesem Bremssystem vorgesehen, dass die pneumatische Bremsvorrichtung nur einen Bremskreis aufweist, der mit den Bremsaktuatoren an allen Rädern verbunden ist, und dass die wenigstens eine Elektromaschine derart ausgebildet ist und betrieben werden kann, dass sie bei einer Störung in der pneumatischen Bremsvorrichtung als Notfall-Betriebsbremse betätigt werden kann, wobei die pneumatische Bremsvorrichtung sowie die mindestens eine Elektromaschine derart ausgebildet sind, dass diese das Elektrofahrzeug oder das Hybridfahrzeug bis zum Stillstand abbremsen können. Zur Überwachung der ordnungsgemäßen Funktion der pneumatischen Bremsvorrichtung ist ein mit mehreren Sensoren verbundenes Steuergerät vorhanden, wobei das Steuergerät dazu ausgebildet ist, das Elektrofahrzeug oder das Hybridfahrzeug beim Auftreten einer Störung innerhalb der pneumatischen Bremsvorrichtung in einem Notfall-Bremsbetrieb durch einen generatorischen Betrieb der mindestens einen Elektromaschine als Notfall-Betriebsbremse drehzahlüberwacht bis zum Stillstand abzubremsen und wobei der mindestens eine Sensor ein Drucksensor und der mindestens eine weitere Sensor ein Drehzahlsensor ist. Der Drehzahlsensor ermöglicht eine Drehzahlkontrolle mindestens eines Rades des Elektrofahrzeugs oder des Hybridfahrzeugs.

Hierdurch ist eine zuverlässige Funktionsüberwachung der pneumatischen Bremsvorrichtung gewährleistet und eine zuverlässige Überwachung des Drucks im Bremskreis der pneumatischen Bremsvorrichtung und eine Drehzahlkontrolle mindestens eines Rades des Elektrofahrzeugs oder des Hybridfahrzeugs möglich.

Infolge des erfindungsgemäß einkreisigen Aufbaus der pneumatischen Bremsvorrichtung ergibt sich unter anderem ein signifikant vereinfachter, gewichtssparender und besonders bauraumsparender Aufbau des Bremssystems. Infolgedessen sind unter anderem neuartige Fahrzeugkonzepte mit einem vergrößerten Fahrgastinnenraum realisierbar. Durch die wenigstens eine generatorisch betreibbare Elektromaschine ist selbst für den Fall eines Totalausfalls der pneumatischen Bremsvorrichtung die vollständige Abbremsbarkeit eines Elektrofahrzeugs beziehungsweise Hybridfahrzeugs bis zum Stillstand möglich. Infolgedessen ist die aus Sicherheitsgründen geforderte Redundanz des neuartigen Bremssystems gegeben. Beim Abbremsen des Elektrofahrzeugs oder des Hybridfahrzeugs durch die im generatorischen Modus betriebene mindestens eine Elektromaschine wird die freiwerdende elektrische Bremsenergie einer sinnvollen Nutzung im Sinne einer Bremsenergierückgewinnung beziehungsweise Rekuperation zugeführt. Beispielsweise können Akkumulatoren des Elektrofahrzeugs oder des Hybridfahrzeugs geladen oder Widerstandsheizungen zur Innenraumbeheizung bestromt werden.

Gemäß einer vorteilhaften Weiterbildung des die Merkmale der Erfindung aufweisenden Bremssystems ist vorgesehen, dass mittels einer Feststellbremsvorrichtung zwei Antriebsräder und/oder mindestens zwei lenkbare Räder drehfest arretierbar sind. Hierdurch ist eine zuverlässige Rollsicherung des Elektrofahrzeugs oder Hybridfahrzeugs beim Anhalten an einer Haltestelle, beim Parken oder dergleichen unabhängig von der pneumatischen Bremsvorrichtung möglich. Durch die vorzugsweise rein digital wirkende, also entweder vollkommen gelöste oder vollständig angezogene Feststellbremsvorrichtung ist zudem ein konstruktiv vereinfachter Aufbau der Bremsvorrichtung gegeben. Alternativ dazu kann die Funktion der Feststellbremsvorrichtung auch durch eine entsprechende Ausgestaltung und Ansteuerung der pneumatischen Bremsvorrichtung realisiert sein.

Bei einer weiteren günstigen Fortbildung ist den Antriebsrädern und/oder den lenkbaren Rädern jeweils ein Feststellbremsaktuator zugeordnet. Hierdurch wirkt die Feststellbremsvorrichtung unmittelbar und mechanisch spielfrei auf mindestens zwei Räder des Elektrofahrzeugs ein.

Gemäß einer anderen vorteilhaften Weiterbildung des Bremssystems ist mittels einer Arretierungsvorrichtung eine Antriebswelle der mindestens einen Elektromaschine mechanisch blockierbar. Infolgedessen kann die Feststellbremsfunktion durch eine konstruktiv vergleichsweise einfach zu realisierende, form- und/oder reibschlüssige mechanische Sperre oder Blockiereinrichtung beziehungsweise Drehsicherung der Elektromaschine realisiert sein, die dabei bevorzugt nur zwei Zustände einnehmen kann und entweder vollständig gelöst oder blockiert ist.

Gemäß einer anderen vorteilhaften Ausgestaltung des Bremssystems ist vorgesehen, dass mittels des mindestens einen Drucksensors der Druck im pneumatischen Bremskreis der pneumatischen Bremsvorrichtung und mittels des mindestens einen Drehzahlsensors die Drehzahl mindestens eines Rades des Elektrofahrzeugs oder des Hybridfahrzeugs durch das Steuergerät überwachbar ist. Infolgedessen ist eine einfache und zuverlässige Überwachung der ordnungsgemäßen Funktion der pneumatischen Bremsvorrichtung durch das Steuergerät möglich.

Weiter ist vorgesehen, dass das Bremssystem derart ausgebildet und betreibbar ist, dass das Elektrofahrzeug oder das Hybridfahrzeug in einem Normal-Bremsbetrieb durch die pneumatische Bremsvorrichtung und/oder durch den generatorischen Betrieb der mindestens einen Elektromaschine bis zum Stillstand abbremsbar ist. Hierdurch ist die volle sicherheitsrelevante Redundanz des Bremssystems gewährleistet.

Vorzugsweise ist den Antriebsrädern und den lenkbaren Rädern jeweils eine Elektromaschine zugeordnet, welche alle bremsend auf das Fahrzeug einwirken können. Hierdurch ist ein Elektrofahrzeug mit einem Allradantrieb ausgestattet. Die den Rädern jeweils zugeordneten Elektromaschinen können in einer derartigen Konstellation zum Beispiel als getriebelose, die Räder direkt antreibende Radnabenmotoren ausgestaltet sein.

Die eingangs genannte Aufgabe wird auch durch ein Verfahren zum Betrieb eines Bremssystems mit den Merkmalen von wenigstens einem der Vorrichtungsansprüche gelöst. Hierzu sieht das Verfahren vor, dass das Elektrofahrzeug oder das Hybridfahrzeug in einem Normal-Bremsbetrieb mittels der pneumatischen Bremsvorrichtung und/oder mittels des generatorischen Betriebs der mindestens einen Elektromaschine abgebremst wird, und das Elektrofahrzeug oder das Hybridfahrzeug bei einer Störung in der pneumatischen Bremsvorrichtung in einem Notfall-Bremsbetrieb durch einen generatorischen Betrieb der mindestens einen Elektromaschine als Notfall-Betriebsbremse bis zum Stillstand abgebremst wird.

Hierdurch ist unter allen Betriebsbedingungen eine zuverlässige Verzögerung des Elektrofahrzeugs oder des Hybridfahrzeugs bis zum Stillstand auch bei einem Störfall innerhalb der pneumatischen Bremsvorrichtung möglich. Umgekehrt kann das Elektrofahrzeug oder das Hybridfahrzeug bei Störungen im generatorischen Bremsbetrieb der Elektromaschine allein durch die pneumatische Bremsvorrichtung vollständig, also bis zum Stillstand abgebremst werden. Ferner können zur weiteren Optimierung der Verzögerungsleistung des Bremssystems in besonderen Fahrsituationen die pneumatische Bremsvorrichtung und der generatorische Bremsbetrieb zeitlich parallel oder abgestuft, gegebenenfalls unter Einbeziehung der Feststellbremsvorrichtung eingesetzt werden.

Zum besseren Verständnis der Erfindung ist der Beschreibung eine Zeichnung beigefügt, in der zwei Ausführungsbeispiele dargestellt sind. In der Zeichnung zeigt
Fig. 1 ein schematisches Blockschaltbild eines erfindungsgemäßen Bremssystems für ein Elektrofahrzeug, und
Fig. 2 ein vereinfachtes Blockschaltbild des Bremssystems des Elektrofahrzeugs mit zusätzlich antreibbaren lenkbaren Rädern und mit jeweils einem Feststellbremsaktuator.

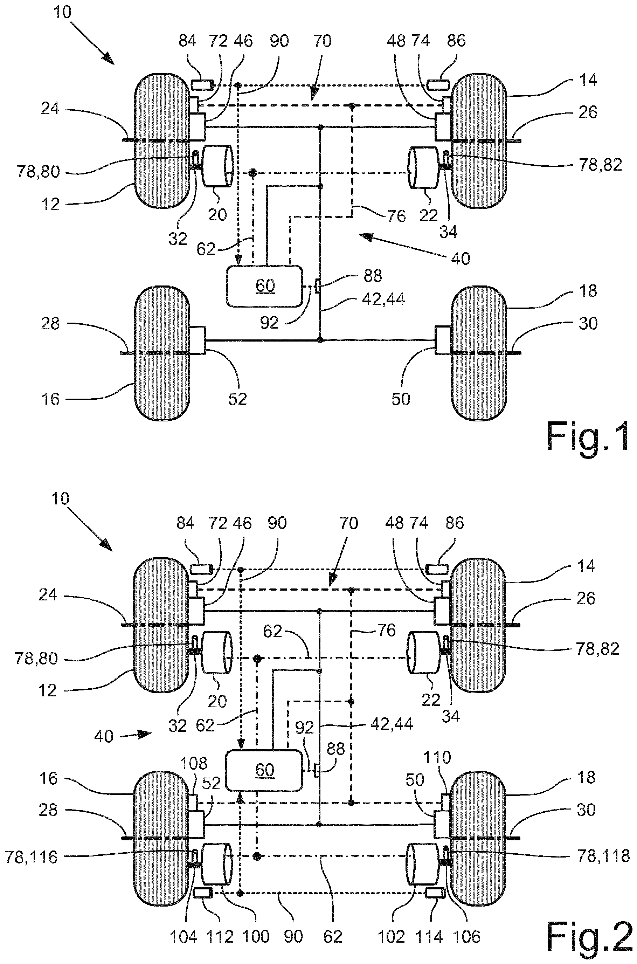

Das in der Fig. 1 nur schematisch dargestellte Elektrofahrzeug 10 oder Hybridfahrzeug ist beispielsweise ein Nahverkehrsbus oder ein Personenkraftwagen, welches zwei antreibbare Antriebsräder 12, 14 und mindestens zwei lenkbare Räder 16, 18 aufweist. Die beiden Antriebsräder 12, 14 sind jeweils von einer wahlweise elektromotorisch oder generatorisch betreibbaren Elektromaschine 20, 22 antreibbar. Die beiden Elektromaschinen 20, 22 können zum Beispiel bürstenlose, elektronisch kommutierte Gleichstrommotoren oder permanent erregte Synchronmaschine sein. Das erste Antriebsrad 12 ist auf einer ersten Antriebsachse 24 und das zweite Antriebsrad 14 ist auf einer zweiten Antriebsachse 26 des Elektrofahrzeugs 10 montiert. Zudem ist das erste lenkbare Rad 16 auf einer ersten Lenkachse 28 und das zweite lenkbare Rad 18 auf einer zweiten Längsachse 30 befestigt.

Das erste Antriebsrad 12 ist hier lediglich beispielhaft mit einer Antriebswelle 32 der ersten Elektromaschine 20 drehfest verbunden, während das zweite Antriebsrad 14 mit einer Antriebswelle 34 der zweiten Elektromaschine 22 gekoppelt ist. Außerdem kann zwischen den beiden Elektromaschinen 20, 22 und dem zugeordneten Antriebsrad 12, 14 jeweils ein nicht dargestelltes mechanisches Getriebe zur Drehzahl- und/oder Drehmomentanpassung angeordnet sein.

Abweichend von dem hier lediglich beispielhaft dargestellten indirekten Antrieb der beiden Antriebsräder 12, 14 mittels der Antriebswellen 32, 34 können die beiden Elektromaschinen 20, 22 auch als so genannte Nabenmotoren direkt in die Antriebsräder 12, 14 integriert sein, wodurch die Antriebswellen 32, 34 und etwaige mechanische Getriebe sowie weitere Maschinenelemente, wie zum Beispiel Wellen, Kardangelenke etc. nicht benötigt werden. In einer solchen Konstellation kann die Felge einen zum Beispiel permanent erregten Außenrotor des Nabenmotors darstellen, während ein mit Wicklungen versehener Innenstator des Nabenmotors endseitig an der Antriebsachse 24, 26 und/oder der Lenkachse 28, 30 angeordnet ist.

Das Elektrofahrzeug 10 oder Hybridfahrzeug verfügt über ein Bremssystem 40, zu dem unter anderem eine pneumatische Bremsvorrichtung 42 gehört. Diese pneumatische Bremsvorrichtung 42 weist erfindungsgemäß lediglich einen Bremskreis 44 auf, an den hier vier Bremsaktuatoren 46, 48, 50, 52 angeschlossen sind. Unter dem Begriff einer fluidischen oder pneumatischen Bremsvorrichtung 42 wird im Kontext dieser Beschreibung eine pneumatisch wirkende Bremsvorrichtung verstanden.

Darüber hinaus ist der einzige Bremskreis 44 der pneumatischen Bremsvorrichtung 42 mit einem elektropneumatischen Steuergerät 60 des Bremssystems 40 verbunden. Dieses Steuergerät 60 steuert die Betätigung von nicht dargestellten elektropneumatischen Ventilen in Fluidleitungen, welche zu den vier Bremsaktuatoren 46, 48, 50, 52 führen. Mittels der vier Bremsaktuatoren 46, 48, 50, 52 lassen sich die vier Räder 12, 14, 16, 18 vorzugsweise individuell und vollständig durch das Steuergerät 60 kontrolliert bis hin zum Stillstand des Elektrofahrzeugs 10 abbremsen.

Die elektrische Regelung der beiden Elektromaschinen 20, 22 zum Betrieb des Elektrofahrzeugs 10 oder des Hybridfahrzeugs erfolgt gleichfalls mittels des Steuergeräts 60, das zu diesem Zweck mittels eines Elektroleitungen aufweisenden Elektrokreises 62 mit den beiden Elektromaschinen 20, 22 verbunden ist. Im normalen Fahrbetrieb werden die Elektromaschinen 20, 22 vom Steuergerät 60 aus dem zur Beschleunigung des Elektrofahrzeugs 10 dienenden elektromotorischen Betrieb in den generatorischen Betrieb beziehungsweise in einen Normal-Bremsbetrieb zum Verzögern des Elektrofahrzeugs 10 und umgekehrt versetzt. Im normalen Fahrbetrieb ist stets eine geringe Zufuhr von Antriebsenergie im elektromotorischen Modus der Elektromaschinen 20, 22 notwendig, um eine vorgegebene Fahrgeschwindigkeit des Elektrofahrzeugs 10 oder des Hybridfahrzeugs konstant zu erhalten.

Die beiden Elektromaschinen 20, 22 sind darüber hinaus derart ausgebildet und durch das Steuergerät 60 regel- und/oder steuerbar, dass sie für den Fall einer Störung im Bereich der pneumatischen Bremsvorrichtung 42 auch als eine Notfall-Betriebsbremse genutzt werden können. Hierdurch ist unbeschadet der erfindungsgemäß lediglich einkreisigen Ausführung der pneumatischen Bremsvorrichtung 42 mit nur einem Bremskreis 44 die aus Sicherheitsgründen stets vorzusehende Redundanz des Bremssystems 40 des Elektrofahrzeugs 10 oder des Hybridfahrzeugs gegeben. Das Elektrofahrzeug 10 oder das Hybridfahrzeug ist im Normal-Bremsbetrieb allein durch die pneumatische Bremsvorrichtung 42 und/oder ausschließlich mittels des generatorischen Betriebs der zwei Elektromaschinen 20, 22 vollständig abbremsbar, wodurch sich eine hohe Betriebssicherheit ergibt. Im Normal-Bremsbetrieb des Elektrofahrzeugs 10 funktionieren sowohl die pneumatische Bremsvorrichtung 42 als auch der generatorische Betrieb der beiden Elektromaschinen 20, 22 beziehungsweise der so genannte Elektrobremsbetrieb störungsfrei.

Im generatorischen Betrieb der beiden Elektromaschinen 20, 22, also im Elektrobremsbetrieb, erfolgt bevorzugt eine Bremsenergierückgewinnung beziehungsweise die Rekuperation der freigesetzten Bremsenergie. Die im Elektrobremsbetrieb anfallende elektrische Bremsenergie kann beispielsweise zur Aufladung von Fahrakkumulatoren, zur Bestromung von elektrischen Widerstandsheizungen eines Fahrgastinnenraumes des Elektrofahrzeugs 10 oder des Hybridfahrzeugs oder zur Speisung anderer elektrischer Verbraucher verwendet werden.

Durch eine geeignete Ansteuerung der beiden Elektromaschinen 20, 22 der Antriebsräder 12, 14 mittels des Steuergeräts 60 kann darüber hinaus gegebenenfalls das für Kurvenfahrten ansonsten vorzusehende mechanische Differenzial ersetzt werden. Weiterhin erlaubt ein individueller Antrieb der Antriebsräder 12, 14 mittels der Elektromaschine 20, 22 eine Unterstützung bei Kurvenfahrten des Elektrofahrzeugs 10 oder des Hybridfahrzeugs. Auch eine heutzutage standardmäßig vorzusehende ABS-Funktionalität des Elektrofahrzeugs 10 lässt sich durch ein geeignetes Antreiben der Antriebsräder 12, 14 mittels der Elektromaschinen 20, 22 und ein gezieltes Abbremsen der Antriebsräder 12, 14 mittels der Bremsaktuatoren 46, 48 und/oder durch den generatorischen Betrieb der Elektromaschinen 20, 22 auf einfache Weise bereitstellen, wobei die hier antriebslosen, lenkbaren Räder 16, 18 lediglich durch die beiden Bremsaktuatoren 50, 52 individuell abbremsbar sind. Die Überwachung sowie die Steuerung und/oder Regelung der Elektromaschinen 20, 22 sowie der Bremsaktuatoren 46, 48, 50, 52 erfolgt hierbei wiederum durch das Steuergerät 60.

Ferner verfügt das Bremssystem 40 des Elektrofahrzeugs 10 oder des Hybridfahrzeugs über eine Feststellbremsvorrichtung 70 mit hier lediglich zwei den beiden Antriebsrädern 12, 14 zugeordneten Feststellbremsaktuatoren 72, 74. Die Feststellbremsaktuatoren 72, 74 sind hier beispielhaft durch einen Feststellbremskreis 76 mit dem Steuergerät 60 verbunden. Mithilfe der beiden Feststellbremsaktuatoren 72, 74 lassen sich zumindest die zwei Antriebsräder 12, 14 zum Beispiel beim Halten oder Parken des Elektrofahrzeugs 10 oder des Hybridfahrzeugs als Sicherung gegen unbeabsichtigtes Wegrollen bzw. als Rollsicherung verlässlich blockieren. Darüber hinaus ist durch die Feststellbremsvorrichtung 70 eine zuverlässige Rollsicherung des Elektrofahrzeugs 10 oder des Hybridfahrzeug auf geneigten Untergründen gegeben. Die Feststellbremsaktuatoren 72, 74 können zum Beispiel jeweils als sogenannter electric assisted Actuator aufgebaut sein, der im Vergleich zur standardmäßigen Feststellbremse eine weitere Bauraumverkleinerung gestattet. Die beiden lenkbaren Räder 16, 18 des Elektrofahrzeugs 10 oder des Hybridfahrzeugs können ebenfalls jeweils mit einem hier nicht dargestellten Feststellbremsaktuator ausgerüstet sein (siehe Fig. 2).

Alternativ oder ergänzend zur Feststellbremsvorrichtung 70 kann eine Arretierungsvorrichtung 78 vorgesehen sein, die hier lediglich exemplarisch zwei Blockierglieder 80, 82 umfasst. Mithilfe der von dem Steuergerät 60 kontrollierten Blockierglieder 80, 82 lassen sich die Antriebswellen 32, 34 der Elektromaschinen 20, 22 und damit die beiden Antriebsräder 12, 14 unter der Kontrolle des Steuergeräts 60 mittels einer mechanischen Formschluss- und/oder Reibschlussverbindung drehfest arretieren. Die Blockierglieder 80, 82 sind zu diesem Zweck durch nicht dargestellte Verbindungsleitungen mit dem Steuergerät 60 elektrisch oder pneumatisch verbunden. Unter anderem zur verlässlichen Detektion der Voraussetzungen für eine Aktivierung eines Notfall-Bremsbetriebs ist das Steuergerät 60 hier mit zwei Drehzahlsensoren 84, 86 sowie einem Drucksensor 88 verbunden. Die Verbindung zwischen den Drehzahlsensoren 84, 86 und dem Steuergerät 60 erfolgt über einen ersten Sensorkreis 90, während die signaltechnische Kopplung zwischen dem Drucksensor 88 und dem Steuergerät 60 über einen zweiten Sensorkreis 92 erfolgt. Die beiden Sensorkreise 90, 92 können jeweils ein Bestandteil eines CAN-Bus sein.

Der Notfall-Bremsbetrieb ist beispielsweise dann einzuleiten, wenn der Drucksensor 88 einen unerwartet starken, leckagebedingten Abfall des Fluiddrucks im Bremskreis 44 der pneumatischen Bremsvorrichtung 42 registriert und/oder ein relevanter Anstieg des Drucks im Bremskreis 44 der pneumatischen Bremsvorrichtung 42 nicht zu einer signifikanten Reduzierung der von den beiden Drehzahlsensoren 84, 86 erfassten Drehzahl der Antriebsräder 12, 14 führt, oder dieser Druckanstieg nicht zu einer mit nicht dargestellten Beschleunigungssensoren erfassbaren Verzögerung des Elektrofahrzeugs 10 oder des Hybridfahrzeugs führt. Zur sicheren Detektion eines Störfalls innerhalb der pneumatischen Bremsvorrichtung 42 können darüber hinaus ergänzend andere Sensortypen, wie zum Beispiel Radarsensoren oder CCD-Kameras zur berührungslosen Geschwindigkeitsmessung des Elektrofahrzeugs 10, Neigungssensoren, Beschleunigungssensoren, optische Sensoren, Magnetsensoren sowie gegebenenfalls GPS-Sensoren vorgesehen und mit dem Steuergerät 60 verbunden sein.

Das Einleiten des Notfall-Bremsbetriebs des Elektrofahrzeugs 10 erfolgt dann kontrolliert durch das Steuergerät 60 mittels der Aktivierung des generatorischen Betriebs der beiden Elektromaschinen 20, 22 beziehungsweise des Elektrobremsbetriebs, wobei die beiden Antriebsräder 12, 14 mit Hilfe der Drehzahlsensoren 84, 86 drehzahlüberwacht bis zum vollständigen Stillstand möglichst stark abgebremst werden. Hierdurch lässt sich auch bei einem Störfall innerhalb der pneumatischen Bremsvorrichtung 42 die höchstmögliche Verzögerung beziehungsweise Abbremsung des Elektrofahrzeugs 10 oder des Hybridfahrzeugs erreichen. Im Notfall-Bremsbetrieb fungieren die beiden Elektromaschinen 20, 22 des Elektrofahrzeugs oder des Hybridfahrzeugs dann als elektrische Notfall-Betriebsbremse. Entsprechend dem erfindungsgemäßen Verfahren wird das Elektrofahrzeug 10 oder Hybridfahrzeug im Normal-Bremsbetrieb zumindest teilweise durch die pneumatische Bremsvorrichtung 42 und/oder zumindest teilweise durch den generatorischen Betrieb beziehungsweise den Elektrobremsbetrieb der beiden Elektromaschinen 20, 22 unter allen praktisch auftretenden Betriebsbedingungen zuverlässig und mit einer für die Insassen sowie dem aktuellen Fahrzustand optimal angepassten Verzögerung abgebremst.

Für den Fall, dass mittels des Steuergeräts 60 eine Störung innerhalb der pneumatischen Bremsvorrichtung 42 des Bremssystems 40 detektiert wird, erfolgt das Abbremsen des Elektrofahrzeugs 10 bis zu dessen vollständigen Stillstand im Notfall-Bremsbetrieb durch den generatorischen Betrieb der beiden Elektromaschinen 20, 22, die in dieser Konstellation als Notfall-Betriebsbremse fungieren, unter Einbeziehung der etwaig noch vorhandenen Restbremswirkung der pneumatischen Bremsvorrichtung 42. Hierbei wird vorzugsweise die höchstmögliche Verzögerung des Elektrofahrzeugs 10 angestrebt, wobei die maximale physische Belastbarkeit von Insassen, die aktuelle Fahrsituation des Elektrofahrzeugs 10 sowie die für die mechanische Struktur des Elektrofahrzeugs maximal verträglichen Lasten von dem Steuergerät 60 berücksichtigt werden. Gegebenenfalls kann zur weiteren Steigerung der Verzögerungswirkung des Bremssystems 40, insbesondere am Ende des Abbremsvorgangs, die Feststellbremsvorrichtung 70 kontrolliert vom Steuergerät 60 im Notfall-Bremsbetrieb zugeschaltet werden.

Unter anderem aufgrund der erfindungsgemäß einkreisigen Ausgestaltung der pneumatischen Bremsvorrichtung 42 kann am Elektrofahrzeug 10 oder Hybridfahrzeug beträchtlich nicht genutzter Bauraum für eine andere Verwendung zur Verfügung gestellt werden. Außerdem wird das Gewicht des Elektrofahrzeugs 10 oder des Hybridfahrzeugs reduziert. Aufgrund der Gewichtsreduzierung wohnt dem erfindungsgemäßen Bremssystem 40 ein beträchtliches Energieeinsparpotential inne. Darüber hinaus gestattet die einkreisige Ausführung der pneumatischen Bremsvorrichtung 42 eine vereinfachte Steuerung und/oder Regelung derselben durch das Steuergerät 60, welches in Verbindung mit der bevorzugt digital arbeitenden, also entweder vollständig gelösten oder angezogenen Feststellbremsvorrichtung 70, weitere konstruktive Freiräume für das Elektrofahrzeug 10 eröffnet.

Fig. 2 zeigt ein vereinfachtes Blockschaltbild des Bremssystems des Elektrofahrzeugs 11 oder Hybridfahrzeugs ähnlich dem von Fig. 1, jedoch mit motorisch antreibbaren lenkbaren Rädern sowie mit jeweils einem Feststellbremsaktuator.

An den Rädern 12, 14, 16, 18 des Elektrofahrzeugs 11 oder Hybridfahrzeugs ist wiederum jeweils ein Bremsaktuator 46, 48, 50, 52 der pneumatischen Bremsvorrichtung 42 des Bremssystems 40 angeordnet. Die Bremsaktuatoren 46, 48, 50, 52 stehen hierbei mittels des pneumatischen Bremskreises 44 mit dem Steuergerät 60 in Wirkverbindung und ermöglichen ein vom Steuergerät 60 kontrolliertes, vollständiges Abbremsen des Elektrofahrzeugs 11 oder Hybridfahrzeugs im normalen Fahrbetrieb. Die beiden Antriebsräder 12, 14 werden mittels der Antriebswellen 32, 34 der Elektromaschinen 20, 22 drehend angetrieben. Im Unterschied zur Fig. 1 sind hier die beiden lenkbaren Räder 16, 18 des Elektrofahrzeugs 11 oder Hybridfahrzeugs ebenfalls mittels jeweils einer Elektromaschine 100, 102 über die Antriebswellen 104, 106 zur Realisierung eines 4-Radantriebs beziehungsweise Allradantriebs drehend antreibbar. Die beiden Elektromaschinen 100, 102 sind mittels des Elektrokreises 62 an das Steuergerät 60 angebunden und werden von diesem kontrolliert, sowie auf geeignete Weise angesteuert und/oder geregelt.

Die Feststellbremsvorrichtung 70 umfasst erneut die beiden schon beschriebenen Feststellbremsaktuatoren 72, 74 an den Antriebsrädern 12, 14, welche wiederum über den Feststellbremskreis 76 an das Steuergerät 60 angebunden sind. Als ein weiterer Unterschied zur Ausführungsform des Bremssystems 40 von Fig. 1 ist hier ein dritter Feststellbremsaktuator 108 an dem ersten lenkbaren Rad 16 und ein vierter Feststellbremsaktuator 110 an dem zweiten lenkbaren Rad 18 angeordnet. Die beiden zusätzlichen Feststellbremsaktuatoren 108, 110 an den lenkbaren Rädern 16, 18 sind wie die Feststellbremsaktuatoren 72, 74 an den Antriebsrädern 12, 14 mittels des Feststellbremskreises 76 mit dem Steuergerät 60 steuerungstechnisch verbunden. Durch die vier Feststellbremsaktuatoren 72, 74 108, 110 geht eine weitere Steigerung der Wirksamkeit der Rollsicherung des Elektrofahrzeugs 11 oder Hybridfahrzeugs einher.

Als ein weiterer Unterschied zu der Ausführungsform des Bremssystems gemäß Fig. 1 ist an den lenkbaren Räder 16, 18 ebenfalls jeweils ein Drehzahlsensor 112, 114 angeordnet, deren Messwerte über den ersten Sensorkreis 90 dem Steuergerät 60 zugeführt werden, wodurch eine exakte, individuelle Drehzahlerfassung aller Räder 12, 14, 16, 18 mittels des Steuergeräts 60 möglich ist. An den Antriebswellen 32, 34 der beiden Antriebsräder 12, 14 befinden sich zudem die Blockierglieder 116, 118 als Teil der Arretierungsvorrichtung 78.

Im Unterschied zu der in Fig. 1 gezeigten Ausführungsvariante des Bremssystems 40 ist hier an jeder Antriebswelle 104, 106 ebenfalls ein Blockierglied 116, 118 angeordnet. Diese Blockierglieder 116, 118 sind analog zu den Blockiergliedern 80, 82 der Arretierungsvorrichtung 78 gleichfalls durch das Steuergerät 60 über nicht dargestellte Verbindungsleitungen betätigbar. Der Ablauf des Verfahrens zum Betrieb des hier gezeigten, lediglich geringfügig erweiterten Bremssystems 40 entspricht im Wesentlichen dem des ersten Ausführungsbeispiels gemäß Fig. 1, sodass hierzu auf die einschlägigen Beschreibungsteile in Fig. 1 verwiesen wird.

Aufgrund der einkreisigen Ausführung der pneumatischen Bremsvorrichtung 42 des Bremssystems 40 ergibt sich in Verbindung mit den vorzugweise digital arbeitenden vier Feststellbremsaktuatoren 72, 74, 108, 110 im Vergleich zu den bekannten fluidischen Zweikreisbremsvorrichtungen ein beträchtlich vereinfachter konstruktiver Aufbau. Infolge der lediglich einkreisigen Auslegung der pneumatischen Bremsvorrichtung 42 kann daher eine Nutzraumvergrößerung des Elektrofahrzeugs 10, 11 oder Hybridfahrzeugs sowie eine Reduzierung der Herstellkosten erreicht werden, wobei zugleich die aus Sicherheitsgründen stets vorzusehende Ausfallredundanz des ganzen Bremssystems 40 gewährleistet ist.

### Bezugszeichen (Teil der Beschreibung)

- 10: Elektrofahrzeug oder Hybridfahrzeug (erste Ausführungsform)
- 11: Elektrofahrzeug oder Hybridfahrzeug (zweite Ausführungsform)
- 12: Erstes Antriebsrad
- 14: Zweites Antriebsrad
- 16: Erstes lenkbares Rad
- 18: Zweites lenkbares Rad
- 20: Erste Elektromaschine
- 22: Zweite Elektromaschine
- 24: Erste Antriebsachse
- 26: Zweite Antriebsachse
- 28: Erste Lenkachse
- 30: Zweite Lenkachse
- 32: Erste Antriebswelle
- 34: Zweite Antriebswelle
- 40: Bremssystem
- 42: Pneumatische Bremsvorrichtung
- 44: Pneumatischer Bremskreis
- 46: Erster Bremsaktuator
- 48: Zweiter Bremsaktuator
- 50: Dritter Bremsaktuator
- 52: Vierter Bremsaktuator
- 60: Steuergerät
- 62: Elektrokreis
- 70: Feststellbremsvorrichtung
- 72: Erster Feststellbremsaktuator
- 74: Zweiter Feststellbremsaktuator
- 76: Feststellbremskreis
- 78: Arretierungsvorrichtung
- 80: Erstes Blockierglied
- 82: Zweites Blockierglied
- 84: Erster Drehzahlsensor am Antriebsrad 12
- 86: Zweiter Drehzahlsensor am Antriebsrad 14
- 88: Drucksensor
- 90: Erster Sensorkreis
- 92: Zweiter Sensorkreis
- 100: Dritte Elektromaschine
- 102: Vierte Elektromaschine
- 104: Dritte Antriebswelle
- 106: Vierte Antriebswelle
- 108: Dritter Feststellbremsaktuator
- 110: Vierter Feststellbremsaktuator
- 112: Dritter Drehzahlsensor am lenkbaren Rad 16
- 114: Vierter Drehzahlsensor am lenkbaren Rad 18
- 116: Drittes Blockierglied
- 118: Viertes Blockierglied

## Patentansprüche

1. Bremssystem (40) eines Elektrofahrzeugs (10, 11) oder Hybridfahrzeugs, welches mindestens zwei Antriebsräder (12, 14) und mindestens zwei lenkbare Räder (16, 18) aufweist, von denen wenigstens zwei Räder (12, 14, 16, 18) mittels zumindest einer elektromotorisch und generatorisch betreibbaren Elektromaschine (20, 22, 100, 102) antreibbar sind, und welches eine pneumatische Bremsvorrichtung (42) aufweist, welche mittels Bremsaktuatoren (46, 48, 50, 52) auf zumindest zwei Räder (12, 14, 16, 18) diese abbremsend einwirken kann,
wobei die pneumatische Bremsvorrichtung (42) nur einen Bremskreis (44) aufweist, der mit den Bremsaktuatoren (46, 48, 50, 52) an allen Rädern (12, 14, 16, 18) verbunden ist, und
dass die wenigstens eine Elektromaschine (20, 22, 100, 102) derart ausgebildet ist und betrieben werden kann, dass sie bei einer Störung in der pneumatischen Bremsvorrichtung (42) als Notfall-Betriebsbremse betätigt werden kann,
wobei die pneumatische Bremsvorrichtung (42) sowie die mindestens eine Elektromaschine (20, 22, 100, 102) weiter derart ausgebildet sind, dass diese das Elektrofahrzeug (10, 11) oder das Hybridfahrzeug bis zum Stillstand abbremsen können,
**dadurch gekennzeichnet, dass**
zur Überwachung der ordnungsgemäßen Funktion der pneumatischen Bremsvorrichtung (42) ein mit mehreren Sensoren (84, 86, 88, 112, 114) verbundenes Steuergerät (60) vorhanden ist,
wobei das Steuergerät (60) dazu ausgebildet ist, das Elektrofahrzeug (10, 11) oder das Hybridfahrzeug beim Auftreten einer Störung innerhalb der pneumatischen Bremsvorrichtung (42) in einem Notfall-Bremsbetrieb durch einen generatorischen Betrieb der mindestens einen Elektromaschine (20, 22, 100, 102) als Notfall-Betriebsbremse drehzahlüberwacht bis zum Stillstand abzubremsen und
wobei der mindestens eine Sensor ein Drucksensor (88) und der mindestens eine weitere Sensor ein Drehzahlsensor (84, 86, 112, 114) ist.

2. Bremssystem nach Anspruch 1, **dadurch gekennzeichnet, dass** mittels einer Feststellbremsvorrichtung (70) zwei Antriebsräder (12, 14) und/oder mindestens zwei lenkbare Räder (16, 18) drehfest arretierbar sind.

3. Bremssystem nach Anspruch 2, **dadurch gekennzeichnet, dass** den Antriebsrädern (12, 14) und/oder den lenkbaren Rädern (16, 18) jeweils ein Feststellbremsaktuator (72, 74, 108, 110) zugeordnet ist.

4. Bremssystem nach einem der Ansprüche 1 bis 3, **dadurch gekennzeichnet, dass** mittels einer Arretierungsvorrichtung (78) eine Antriebswelle (32, 34, 104, 106) der mindestens einen Elektromaschine (20, 22, 100, 102) mechanisch blockierbar ist.

5. Bremssystem nach Anspruch 1, **dadurch gekennzeichnet, dass** mittels des mindestens einen Drucksensors (88) der Druck im pneumatischen Bremskreis (44) der pneumatischen Bremsvorrichtung (42) und mittels des mindestens einen Drehzahlsensors (84, 86, 112, 114) die Drehzahl mindestens eines Rades (12, 14, 16, 18) des Elektrofahrzeugs (10, 11) oder des Hybridfahrzeugs durch das Steuergerät (60) überwachbar ist.

6. Bremssystem nach einem der Ansprüche 1 bis 5, **dadurch gekennzeichnet, dass** dieses derart ausgebildet und betreibbar ist, dass das Elektrofahrzeug (10, 11) oder das Hybridfahrzeug in einem Normal-Bremsbetrieb durch die pneumatische Bremsvorrichtung (42) und/oder durch den generatorischen Betrieb der mindestens einen Elektromaschine (20, 22, 100, 102) bis zum Stillstand abbremsbar ist.

7. Bremssystem nach einem der Ansprüche 1 bis 6, **dadurch gekennzeichnet, dass** den Antriebsrädern (12, 14) und den lenkbaren Rädern (16, 18) jeweils eine Elektromaschine (20, 22, 100, 102) zugeordnet ist.

8. Verfahren zum Betrieb des Bremssystems (40) gemäß zumindest einem der Ansprüche 1 bis 7, **dadurch gekennzeichnet, dass** das Elektrofahrzeug (10, 11) oder das Hybridfahrzeug in einem Normal-Bremsbetrieb mittels der pneumatischen Bremsvorrichtung (42) und/oder mittels des generatorischen Betriebs der mindestens einen Elektromaschine (20, 22, 100, 102) abgebremst wird, und das Elektrofahrzeug (10, 11) oder das Hybridfahrzeug bei einer Störung in der pneumatischen Bremsvorrichtung (42) in einem Notfall-Bremsbetrieb durch einen generatorischen Betrieb der mindestens einen Elektromaschine (20, 22, 100, 102) als Notfall-Betriebsbremse bis zum Stillstand abgebremst wird.

9. Verfahren zum Betrieb des Bremssystems (40) gemäß zumindest einem der Ansprüche 1 bis 7, **dadurch gekennzeichnet, dass** das Elektrofahrzeug (10, 11) oder das Hybridfahrzeug in einem Normal-Bremsbetrieb mittels der pneumatischen Bremsvorrichtung (42) und/oder mittels des generatorischen Betriebs der mindestens einen Elektromaschine (20, 22, 100, 102) abgebremst wird, und das Elektrofahrzeug (10, 11) oder das Hybridfahrzeug bei einer Störung des generatorischen Betriebs der mindestens einen Elektromaschine (20, 22, 100, 102) in einem Notfall-Bremsbetrieb alleine durch den Betrieb der pneumatischen Bremsvorrichtung (42) bis zum Stillstand abgebremst wird.

## Claims

1. Brake system (40) of an electric vehicle (10, 11) or hybrid vehicle, which comprises at least two drive wheels (12, 14) and at least two steerable wheels (16, 18), of which at least two wheels (12, 14, 16, 18) can be driven by means of at least one electric machine (20, 22, 100, 102) that can be operated as an electric motor and as a generator, and which has a pneumatic braking device (42), which can act on at least two wheels (12, 14, 16, 18) in a braking manner by means of brake actuators (46, 48, 50, 52),
the pneumatic braking device (42) comprising only one brake circuit (44), which is connected to the brake actuators (46, 48, 50, 52) on all wheels (12, 14, 16, 18), and
the at least one electric machine (20, 22, 100, 102) being designed and operable such that it can be actuated as an emergency service brake in the event of a fault in the pneumatic braking device (42),
the pneumatic braking device (42) and the at least one electric machine (20, 22, 100, 102) being further designed such that they can brake the electric vehicle (10, 11) or the hybrid vehicle to a standstill,
**characterized in that**
a controller (60) connected to a plurality of sensors (84, 86, 88, 112, 114) is present for monitoring the correct function of the pneumatic braking device (42),
the controller (60) being designed to brake the electric vehicle (10, 11) or the hybrid vehicle to a standstill in a speed-monitored manner in the event of a fault within the pneumatic braking device (42) in an emergency braking mode by means of a generator mode of the at least one electric machine (20, 22, 100, 102) as an emergency service brake, and
the at least one sensor being a pressure sensor (88), and the at least one further sensor being a rotational speed sensor (84, 86, 112, 114).

2. Brake system according to claim 1, **characterized in that** two drive wheels (12, 14) and/or at least two steerable wheels (16, 18) can be locked in a rotationally fixed manner by means of a parking brake device (70).

3. Brake system according to claim 2, **characterized in that** a parking brake actuator (72, 74, 108, 110) is associated with each of the drive wheels (12, 14) and/or the steerable wheels (16, 18).

4. Brake system according to any of claims 1 to 3, **characterized in that** a drive shaft (32, 34, 104, 106) of the at least one electric machine (20, 22, 100, 102) can be mechanically blocked by means of a locking device (78).

5. Brake system according to claim 1, **characterized in that** by means of the at least one pressure sensor (88) the pressure in the pneumatic brake circuit (44) of the pneumatic braking device (42), and by means of the at least one rotational speed sensor (84, 86, 112, 114), the rotational speed of at least one wheel (12, 14, 16, 18) of the electric vehicle (10, 11) or of the hybrid vehicle can be monitored by the controller (60).

6. Brake system according to any of claims 1 to 5, **characterized in that** it is designed and operable in such a way that, in a normal braking mode, the electric vehicle (10, 11) or the hybrid vehicle can be braked to a standstill by the pneumatic braking device (42) and/or by the generator mode of the at least one electric machine (20, 22, 100, 102).

7. Brake system according to any of claims 1 to 6, **characterized in that** an electric machine (20, 22, 100, 102) is associated with each of the drive wheels (12, 14) and the steerable wheels (16, 18).

8. Method for operating the brake system (40) according to at least one of claims 1 to 7, **characterized in that** the electric vehicle (10, 11) or the hybrid vehicle is braked in a normal braking mode by means of the pneumatic braking device (42) and/or by means of the generator mode of the at least one electric machine (20, 22, 100, 102), and the electric vehicle (10, 11) or the hybrid vehicle is braked to a standstill in an emergency braking mode in the event of a fault in the pneumatic braking device (42) by means of a generator mode of the at least one electric machine (20, 22, 100, 102) as an emergency service brake.

9. Method for operating the brake system (40) according to at least one of claims 1 to 7, **characterized in that** the electric vehicle (10, 11) or the hybrid vehicle is braked in a normal braking mode by means of the pneumatic braking device (42) and/or by means of the generator mode of the at least one electric machine (20, 22, 100, 102), and the electric vehicle (10, 11) or the hybrid vehicle is braked to a standstill in an emergency braking mode in the event of a fault in the generator mode of the at least one electric machine (20, 22, 100, 102) solely by the operation of the pneumatic braking device (42) in an emergency braking mode.

## Revendications

1. Système de freinage (40) d'un véhicule électrique (10, 11) ou d'un véhicule hybride, lequel système de freinage présente au moins deux roues motrices (12, 14) et au moins deux roues directrices (16, 18) dont au moins deux roues (12, 14, 16, 18) peuvent être entraînées à l'aide d'au moins une machine électrique (20, 22, 100, 102) pouvant fonctionner en mode électromoteur et en mode générateur, et lequel présente un dispositif de freinage (42) pneumatique qui, à l'aide d'actionneurs de freins (46, 48, 50, 52), peut agir sur au moins deux roues (12, 14, 16, 18) pour les freiner,
dans lequel le dispositif de freinage (42) pneumatique présente uniquement un circuit de freinage (44) qui est relié aux actionneurs de freins (46, 48, 50, 52) sur toutes les roues (12, 14, 16, 18), et
dans lequel l'au moins une machine électrique (20, 22, 100, 102) est conçue et peut fonctionner de manière à pouvoir être actionnée en tant que frein de service d'urgence en cas de défaillance du dispositif de freinage (42) pneumatique,
dans lequel le dispositif de freinage (42) pneumatique ainsi que l'au moins une machine électrique (20, 22, 100, 102) sont en outre conçus de manière à pouvoir freiner le véhicule électrique (10, 11) ou le véhicule hybride jusqu'à son arrêt complet,
**caractérisé en ce**
**qu'**un appareil de commande (60) relié à plusieurs capteurs (84, 86, 88, 112, 114) est prévu pour surveiller le bon fonctionnement du dispositif de freinage (42) pneumatique,
dans lequel l'appareil de commande (60) est conçu pour freiner le véhicule électrique (10, 11) ou le véhicule hybride avec une vitesse contrôlée jusqu'à son arrêt complet, en cas de survenue d'une défaillance du dispositif de freinage (42) pneumatique en mode de freinage d'urgence, grâce à un fonctionnement en mode générateur de l'au moins une machine électrique (20, 22, 100, 102) en tant que frein de service d'urgence, et
dans lequel l'au moins un capteur est un capteur de pression (88) et l'au moins un capteur supplémentaire est un capteur de vitesse de rotation (84, 86, 112, 114).

2. Système de freinage selon la revendication 1, **caractérisé en ce que** deux roues motrices (12, 14) et/ou au moins deux roues directrices (16, 18) peuvent être verrouillées en rotation à l'aide d'un dispositif de frein de stationnement (70).

3. Système de freinage selon la revendication 2, **caractérisé en ce que** respectivement un actionneur de frein de stationnement (72, 74, 108, 110) est associé aux roues motrices (12, 14) et/ou aux roues directrices (16, 18).

4. Système de freinage selon l'une des revendications 1 à 3,
**caractérisé en ce qu'**un arbre moteur (32, 34, 104, 106) de l'au moins une machine électrique (20, 22, 100, 102) peut être bloqué mécaniquement à l'aide d'un dispositif de verrouillage (78).

5. Système de freinage selon la revendication 1, **caractérisé en ce que** la pression dans le circuit de freinage (44) pneumatique du dispositif de freinage (42) pneumatique peut être surveillée par l'appareil de commande (60) à l'aide de l'au moins un capteur de pression (88), et la vitesse de rotation d'au moins une roue (12, 14, 16, 18) du véhicule électrique (10, 11) ou du véhicule hybride peut être surveillée par l'appareil de commande à l'aide de l'au moins un capteur de vitesse de rotation (84, 86, 112, 114).

6. Système de freinage selon l'une des revendications 1 à 5,
**caractérisé en ce qu'**il est conçu et peut fonctionner de sorte que le véhicule électrique (10, 11) ou le véhicule hybride peut être freiné jusqu'à son arrêt complet en mode de freinage normal par le dispositif de freinage (42) pneumatique et/ou grâce au fonctionnement en mode générateur de l'au moins une machine électrique (20, 22, 100, 102).

7. Système de freinage selon l'une des revendications 1 à 6,
**caractérisé en ce que** respectivement une machine électrique (20, 22, 100, 102) est associée aux roues motrices (12, 14) et aux roues directrices (16, 18).

8. Procédé permettant de faire fonctionner le système de freinage (40) selon au moins l'une des revendications 1 à 7, **caractérisé en ce que** le véhicule électrique (10, 11) ou le véhicule hybride est freiné en mode de freinage normal à l'aide du dispositif de freinage (42) pneumatique et/ou à l'aide du fonctionnement en mode générateur de l'au moins une machine électrique (20, 22, 100, 102), et le véhicule électrique (10, 11) ou le véhicule hybride est freiné jusqu'à son arrêt complet, en cas de défaillance du dispositif de freinage (42) pneumatique en mode de freinage d'urgence, grâce à un fonctionnement en mode générateur de l'au moins une machine électrique (20, 22, 100, 102) en tant que frein de service d'urgence.

9. Procédé permettant de faire fonctionner le système de freinage (40) selon au moins l'une des revendications 1 à 7, **caractérisé en ce que** le véhicule électrique (10, 11) ou le véhicule hybride est freiné en mode de freinage normal à l'aide du dispositif de freinage (42) pneumatique et/ou à l'aide du fonctionnement en mode générateur de l'au moins une machine électrique (20, 22, 100, 102), et le véhicule électrique (10, 11) ou le véhicule hybride est freiné jusqu'à son arrêt complet, en cas de défaillance du fonctionnement en mode générateur de l'au moins une machine électrique (20, 22, 100, 102) en mode de freinage d'urgence, uniquement grâce au fonctionnement du dispositif de freinage (42) pneumatique.
